**Europäisches Patentamt**

**European Patent Office**

**Office européen des brevets**

(19)

(11) **EP 1 184 682 A2**

(12) **EUROPÄISCHE PATENTANMELDUNG**

(43) Veröffentlichungstag:
06.03.2002 Patentblatt 2002/10

(51) Int Cl.$^7$: **G01T 1/00**

(21) Anmeldenummer: **01000355.6**

(22) Anmeldetag: **08.08.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **10.08.2000 DE 10039002**

(71) Anmelder:
• **Philips Corporate Intellectual Property GmbH 52064 Aachen (DE)**
Benannte Vertragsstaaten:
**DE**
• **Koninklijke Philips Electronics N.V. 5621 BA Eindhoven (NL)**
Benannte Vertragsstaaten:
**FR GB**

(72) Erfinder:
• **Overdick, Michael Dr.**
**Habsburgerallee 11 52064, Aachen (DE)**
• **Rütten, Walter Dr.**
**Habsburgerallee 11 52064, Aachen (DE)**

(74) Vertreter: **Volmer, Georg**
**Philips Corporate Intellectual Property GmbH, Habsburgerallee 11**
**52066 Aachen (DE)**

(54) **Bildkorrekturverfahren für einen Röntgendetektor**

(57) Die Erfindung betrifft ein Bildkorrekturverfahren für einen Röntgendetektor mit einer rückwärtigen Lichtquelle mit verbesserter Korrektur der Nachbildeffekte.

Die Erfindung beruht auf der Erkenntnis, dass die sogenannten "Gain-Effekte" mit bekannten Verfahren nicht zu eliminieren sind. Die "Gain-Effekte" bewirken jedoch bereits bei üblichen diagnostischen Röntgendosen eine Erhöhung der Verstärkung um einige Prozent und damit eine fehlerhafte Hellbildaufnahme.

Erfindungsgemäß werden die Gain-Effekte durch Aufnahme von Lichtquellenbildern mit Hilfe der eingebauten Lichtquelle erfasst und damit die Stärke des Gain-Effektes sowie ein Korrekturfaktor pixelweise bestimmt. Mit Hilfe des Korrekturfaktors werden die Pixelwerte der Hellbildaufnahme korrigiert.

FIG. 1

EP 1 184 682 A2

**Beschreibung**

Die Erfindung betrifft ein Bildkorrekturverfahren für einen flachen dynamischen Röntgendetektor mit einer Sensormatrix, vor deren Photodioden ein Szintillator zur Umwandlung der Röntgenstrahlung in Licht und hinter denen eine Lichtquelle zur gleichmäßigen Beleuchtung aller Photodioden angeordnet ist. Außerdem betrifft die Erfindung eine Röntgeneinrichtung.

Flache dynamische Röntgendetektoren (Flat Dynamic X-ray Detector, kurz FDXD) kommen insbesondere in Röntgeneinrichtungen für die medizinische Diagnostik zur Anwendung. Der Aufbau flacher dynamischer Röntgendetektoren ist beispielsweise in der EP 0 34 54 A2 sowie der EP 0 440 282 A 2 beschrieben.

Für das erfindungsgemäße Bildkorrekturverfahren ist es erforderlich, dass der Röntgendetektor eine Lichtquelle zur gleichmäßigen rückseitigen Beleuchtung sämtlicher Photodioden des Röntgendetektors aufweist. Die Anordnung und Funktionsweise der an sich bekannten rückseitigen Beleuchtung ist beispielsweise in der WO 98/01992 beschrieben.

Für die flachen dynamischen Röntgendetektoren auf der Basis von amorphem Silizium ist bekannt, dass Bildinformation aus früheren Röntgenaufnahmen auch in späteren Röntgenaufnahmen noch sichtbar sein können. In der aktuellen Röntgenaufnahme, die im folgenden als Hellbildaufnahme bezeichnet wird, ist dann noch ein Rest des vorangegangenen Bildes bzw. der vorangegangenen Bilder zu sehen. Diese unerwünschten Bildartefakte klingen mit der Zeit ab und werden im folgenden allgemein als Nachbildeffekte bezeichnet. Die Nachbildeffekte wurden bisher durch Restsignale aus dem Szintillator (Nachleuchten) und aus der Photodiode erklärt. Zusätzlich ist auch das unvollständige Auslesen der Ladung aus der Photodiode in den Ausleseverstärker als Ursache für Restsignale bekannt. Physikalisch ist das sogenannte Trapping und nachfolgende De-Trapping von Ladungsträgern im Szintillator und in der Photodiode der Grund für die Restsignaleffekte. So werden beispielsweise die während einer Belichtung der Photodiode erzeugten Ladungsträger teilweise an Haftstellen gebunden (Trapping). Zu einem späteren Zeitpunkt werden die gebundenen Ladungsträger wieder frei (De-Trapping) und führen dann zu einem verzögerten Bildsignal und somit zu einem Restsignaleffekt.

Zur Beseitigung dieser unerwünschten Restsignaleffekte ist in der DE 196 31 624 eine Röntgendiagnostikeinrichtung mit einer Korrektureinheit beschrieben, die möglicherweise vorhandene Restsignale aus wenigstens einer Dunkelbildaufnahme erfasst. Aus diesen Dunkelbildaufnahmen, in denen nur das momentane Restsignal zu sehen ist, kann der Restsignalanteil in den folgenden Hellbildaufnahmen bestimmt und eliminiert werden.

Bei experimentellen Untersuchungen hat sich allerdings herausgestellt, dass trotz der Dunkelbild-Korrektur weiterhin Nachbildeffekte in den Hellbildaufnahmen auftreten.

Ausgehend von diesem Stand der Technik liegt der Erfindung daher die Aufgabe zugrunde, ein Bildkorrekturverfahren für einen flachen dynamichen Röntgendetektor der eingangs erwähnten Art zu schaffen, das eine verbesserte Korrektur der Nachbildeffekte ermöglicht. Außerdem liegt der Erfindung die Aufgabe zugrunde, eine Röntgeneinrichtung vorzuschlagen, die mit dem verbesserten Bildkorrekturverfahren arbeitet.

Die Lösung dieser Aufgabe beruht auf der Überlegung dass es neben den bekannten Restsignaleffekten noch weitere Nachbildeffekte gibt, die in reinen Dunkelbildern nicht sichtbar und daher mit dem bekannten Korrekturverfahren nicht zu eliminieren sind Bei diesen weiteren Nachbildeffekten handelt es sich um sogenannte "Gain-Effekte", die sowohl im Szintillator als auch in der Photodiode auftreten. Diese Gain-Effekte wurden für Szintillatoren und Photodioden in Untersuchungen nachgewiesen. Dabei stellte sich heraus, dass der Gain-Effekt im Szintillator bei üblichen diagnostischen Röntgendosen gering ist und daher bei dem Bildkorrekturverfahren unberücksichtigt bleiben kann. Hingegen kann der Gain-Effekt in der Photodiode bereits bei üblichen diagnostischen Röntgendosen eine Erhöhung der Verstärkung um einige Prozent und damit sichtbare Nachbildeffekte in folgenden Hellbildaufnahmen bewirken.

Auch die genannten Gain-Effekte lassen sich auf das Trapping von Ladungsträgern zurückführen, da bereits besetzte Haftstellen keine weiteren Ladungsträger aufnehmen können. Hierdurch erhöht sich bei der aktuellen Hellbildaufnahme das Bildsignal in solchen Bereichen, in denen noch viele Haftstellen aus einer vorherigen (Röntgen-)Belichtung gefüllt sind, da weniger der erzeugten Ladungsträger an Haftstellen gebunden werden können. Die so entstandene Erhöhung des Bildsignals macht sich als Gain-Effekt bemerkbar, nicht jedoch unmittelbar als Restsignaleffekt.

Die Erfindung macht sich nunmehr die Tatsache zu Nutze, dass der Gain-Effekt in der Photodiode in einem belichteten Bild sichtbar gemacht werden kann und damit die Stärke des Gain-Effektes in den Photodioden pixelweise bestimmbar ist. Im einzelnen wird der Gain-Effekt für jede Matrixzelle der Sensormatrix nach den Merkmalen des Anspruch 1 bestimmt.

Die nach dem erfindungsgemäßen Verfahren korrigierten Pixelwerte der aktuellen Hellbildaufnahme können dann in an sich bekannter Art und Weise weiterverarbeitet werden, beispielsweise durch Filterung, Speicherung oder Einspeisung in Netzwerke.

Durch die erfindungsgemäße Maßnahme, die Stärke der Gain-Effekte aus wenigstens einem Lichtquellenbild und einem Lichtquellen-Referenzbild zu berechnen, lassen sich auch nach Aufnahmen mit hoher Röntgenstrahlendosis Aufnahmen mit wesentlich niedrigerer Dosis herstellen, die nach der Korrektur weitgehend frei von den beschriebenen Gain-Effekten sind.

Da Röntgeneinrichtungen mit einem flachen dynamischen Röntgendetektor regelmäßig auch eine rückseitige Lichtquelle aufweisen, ist zur Implementierung des erfindungsgemäßen Bildkorrekturverfahrens keine apparative Änderung der Röntgeneinrichtung erforderlich.

Um auch die übrigen Nachbildeffekte zu eliminieren, läuft zusammen mit dem erfindungsgemäßen Bildkorrekturverfahren mindestens ein weiteres an sich bekanntes Bildkorrekturverfahren, wie beispielsweise das eingangs beschriebene Dunkelbildverfahren, ab.

Nachfolgend wird die Erfindung anhand der Zeichnungen näher läutert. Es zeigen:

Figur 1    eine schematische Darstellung einer Röntgeneinrichtung zur Durchführung des erfindungsgemäßen Bildkorrekturverfahrens,

Figur 2    Beispiele für die zeitliche Abfolge verschiedener Röntgen-/Lichtpulse, wobei mit I die Intensität des Röntgen-/Lichtpulses und mit t die Zeit bezeichnet ist.

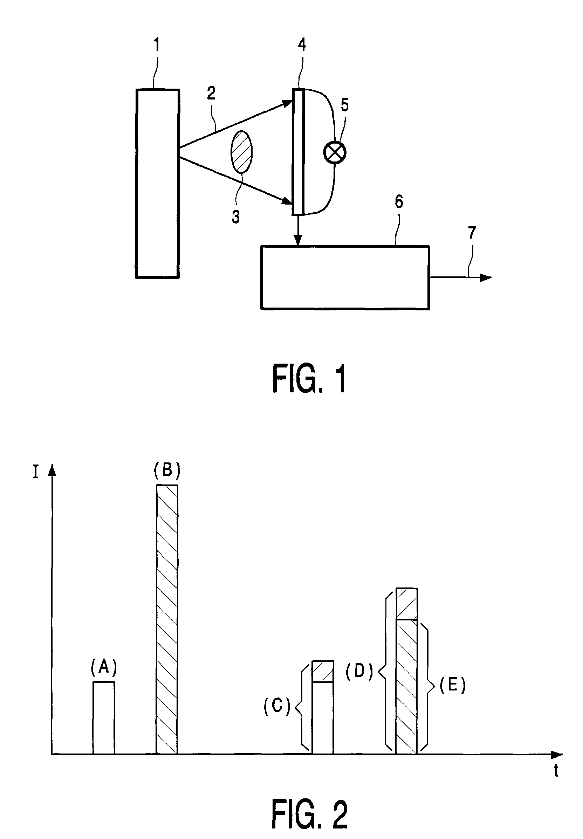

In Figur 1 ist mit 1 eine Röntgenstrahlenquelle bezeichnet, deren Röntgenstrahlen 2 ein zu untersuchendes Objekt 3, beispielsweise einen menschlichen Körper, durchdringen. Die Röntgenstrahlen 2 fallen nach dem Durchdringen des zu untersuchenden Objektes 3 auf einen flachen dynamischen Röntgendetektor 4, in dem die Röntgenstrahlen 2 nachgewiesen werden. Im Strahlengang hinter dem Röntgendetektor 4 befindet sich eine Lichtquelle 5 zur gleichmäßigen Beleuchtung aller Photodioden innerhalb des Röntgendetektors 4.

Die Bildsignale des Röntgendetektors 4 werden einer Korrektureinheit 6 zugeführt und dort gegebenenfalls nach dem erfindungsgemäßen Korrekturverfahren korrigiert. Die korrigierten Bildsignale 7 können dann in üblicher Art und Weise weiterverarbeitet werden.

Zur Korrektur der Bildsignale des Röntgendetektors 4 wird zunächst die Röntgenstrahlenquelle 1 abgeschaltet. Die Nachbildeffekte, insbesondere die Gain-Effekte infolge von Röntgenstrahlen, klingen innerhalb weniger Minuten ab. Nun wird die Sensormatrix des Röntgendetektors 4 mit der Lichtquelle 5 belichtet. Die in den einzelnen Pixeln erhaltenen Signale (Pixelwerte) werden als Lichtquellen-Referenzbild gespeichert. Wird die Röntgenstrahlenquelle 1 für eine Hellbildaufnahme wieder aktiviert, treten Nachbildeffekte, insbesondere Gain-Effekte auf. Bevor nun die Nachbildeffekte, insbesondere die Gain-Effekte, infolge der Röntgenstrahlen der Hellbildaufnahme abklingen, wird die Sensormatrix des Röntgendetektors 4 erneut mit der Lichtquelle 5 belichtet und die so gewonnenen Signale (Pixelwerte) pixelweise als Lichtquellenbild gespeichert. Sowohl die Aufnahme der Lichtquellen-Referenzbilder als auch die Aufnahme der Lichtquellenbilder erfolgt automatisch. Lichtquellen-Refererenzbilder werden vorzugsweise mehrmals täglich aufgenommen, beispielsweise wenn über einen längeren Zeitraum keine Hellbildaufnahmen erstellt wurden. Die Lichtquellenbilder sollen vorzugsweise zeitnah vor einer zu korrigierenden Hellbildaufnahme erfasst werden. In dem in kurzen Abständen (z. B. alle 10 Sekunden) Lichtquellenbilder aufgenommen werden, wird sichergestellt, dass bei Auslösung einer Hellbildaufnahme das letzte Lichtquellenbild nicht zu lange zurückliegt, also "zeitnah" vor einer zu korrigierenden Hellbildaufnahme erfasst wurde.

Dies ist allerdings in einer Ausgestaltung der Erfindung nach Anspruch 3 nicht erforderlich, wenn ein weiterer Korrekturwert (K') aus mindestens einem vorausgehenden Korrekturwert (K) durch Extrapolationsverfahren berechnet und auf die folgenden Hellbildaufnahmen angewendet wird. Die Korrektur mit dem weiteren Korrekturwert (K') bietet sich insbesondere dann an, wenn nach Hellbildaufnahmen mit hoher Röntgendosis mehrere Hellbildaufnahmen mit niedriger Röntgendosis aufgenommen werden sollen, beispielsweise bei einem Fluoroskopie-Betrieb nach Hellbildaufnahmen mit hoher Röntgendosis.

In der Korrektureinheit stehen nun sämtliche Pixelwerte des Lichtquellenreferenzbildes sowie des anschließend aufgenommenen Lichtquellenbildes zur Verfügung. Pixelweise wird ein Korrekturwert als Quotient aus den Pixelwerten des Lichtquellenbildes und den Pixelwerten des Lichtquellenreferenzbildes berechnet. Mit Hilfe dieses für jedes Pixel ermittelten Korrekturwertes lässt sich aus jedem Pixelwert einer nachfolgenden Hellbildaufnahme ein korrigierter Pixelwert ermitteln, wobei die Folge der korrigierten Pixelwerte das korrigierte Bildsignal 7 ergeben.

In Figur 2 ist das zeitliche Schema dargestellt, nach dem die Bestrahlung des Röntgendetektors 4 erfolgt.

Nach dem Abklingen etwaiger Nachbildeffekte ergibt sich für jedes Pixel ein mit (A) bezeichneter Pixelwert des Lichtquellen-Referenzbildes.

Nach dem Beaufschlagen des Röntgendetektors 4 mit Röntgenstrahlen ergibt sich für jedes Pixel ein mit (B) bezeichneter Pixelwert einer ersten Hellbildaufnahme.

Vor dem Abklingen der Nachbildeffekte aufgrund der Röntgenstrahlen ergibt sich aufgrund der erneuten Lichtquellenbestrahlung für jedes Pixel ein mit (C) bezeichneter Pixelwert des Lichtquellen-Bildes. Wie aus der Darstellung des Pixelwertes (C) ersichtlich, ist dieses gegenüber dem Lichtquellen-Referenzbild (A) aufgrund von Gain-Effekten erhöht.

Indem nun pixelweise ein Korrekturwert aus dem Quotienten des Pixelwertes (C) und des Pixelwertes (A) berechnet wird, lässt sich für jeden Pixelwert (D) der folgenden Hellbildaufnahme ein korrigierter Pixelwert (E) errechnen.

Das nachfolgende Rechenbeispiel veranschaulicht das erfindungsgemäße Korrekturverfahren:

**Pixelwert (A)** des Lichtquellenreferenzbildes = 2000
**Pixelwert (C)** des Lichtquellen-Bildes = 2100
**Pixelwert (D)** der Hellbildaufnahme = 5250

Korrekturwert (K)

$$(K) = (C) /(A) = 2100 /2000 = 1,05$$

**Pixelwert (E) der korrigierten Hellbildaufnahme**

$$(E) = (D) /(K) = 5250 /1,05 = 5000$$

Es wird darauf hingewiesen, dass weder die Figur 2 noch das vorstehende Rechenbeispiel aus Gründen der Übersichtlichkeit die aus dem Stand der Technik bekannten Restsignaleffekte berücksichtigen.

**Patentansprüche**

1. Bildkorrekturverfahren für einen flachen dynamischen Röntgendetektor mit einer Sensormatrix, vor deren Photodioden ein Szintillator zur Umwandlung der Röntgenstrahlung in Licht und hinter der eine Lichtquelle zur gleichmäßigen Beleuchtung aller Photodioden angeordnet ist,
   **dadurch gekennzeichnet,**
   **dass** der Gain-Effekt für jede Matrixzelle der Sensormatrix einzeln bestimmt wird, indem

   - die Sensormatrix nach dem Abklingen etwaiger Gain-Effekte infolge von Röntgenbestrahlung (2) mit der Lichtquelle (5) anstelle der Röntgenstrahlenquelle (1) mindestens einmal belichtet wird und das so gewonnene Lichtquellen-Referenzbild gespeichert wird,
   - zu einem späteren Zeitpunkt vor dem Abklingen der Gain-Effekte infolge von Röntgenbestrahlung erneut die Sensormatrix mit der Lichtquelle (5) anstelle der Röntgenstrahlenquelle (2) belichtet und das so gewonnene Lichtquellenbild gespeichert wird,
   - pixelweise ein Korrekturwert (K) als Quotient aus den Pixelwerten (C) des Lichtquellen-Bildes und den Pixelwerten (A) des Lichtquellenreferenzbildes berechnet wird und
   - anschließend aus jedem unter Einwirkung von Röntgenstrahlung pixelweise gemessenen Pixelwert (D) unter Berücksichtigung des Korrekturwerts (K) ein korrigierter Pixelwert (E) ermittelt wird.

2. Bildkorrekturverfahren nach Anspruch 1,
   **dadurch gekennzeichnet,**
   **dass** der korrigierte Pixelwert (E) ermittelt wird, indem pixelweise der Quotient aus dem unter Einwirkung der Röntgenstrahlung gemessenen Pixelwert (D) und dem jeweiligen Korrekturwert (K) berechnet wird.

3. Bildkorrekturverfahren nach Anspruch 1 oder 2,
   **dadurch gekennzeichnet,**
   **dass** ein weiterer Korrekturwert (K') aus mindestens einem vorausgehenden Korrekturwert (K) durch Extrapolationsverfahren berechnet und anschließend ein korrigierter Pixelwert (E) ermittelt wird, indem pixelweise der Quotient aus Jedem unter Einwirkung der Röntgenstrahlung gemessenen Pixelwert (D) und dem weiteren Korrekturwert (K') berechnet wird.

4. Bildkorrekturverfahren nach Anspruch 1,
   **dadurch gekennzeichnet,**
   **dass** zusammen mit dem Bildkorrekturverfahren mindestens ein weiteres an sich bekanntes Bildkorrekturverfahren zur Korrektur von Restsignaleffekten abläuft.

5. Röntgeneinrichtung mit einem flachen dynamischen Röntgendetektor(4) mit einer Sensormatrix, vor deren Photodioden ein Szintillator zur Umwandlung der Röntgenstrahlung (2) in Licht und hinter denen eine Lichtquelle (5) zur gleichmäßigen Beleuchtung aller Photodioden angeordnet ist, mit mindestens einer Korrektureinheit (6), die die von der Sensormatrix erzeugten Bildsignale der Lichtquelle vor und nach dem Abklingen etwaiger Gain-Effekte infolge von Röntgenbestrahlung (2) erfasst, wobei die Korrektureinheit (6) die Bildsignale der aktuellen Hellbildaufnahmen in Abhängigkeit von dem Vorhandensein von Gain-Effekten sowie deren Intensität korrigiert.

FIG. 1

FIG. 2